# EUROPEAN PATENT APPLICATION

(11) **EP 1 562 308 A2**
(43) Date of publication of application: **10.08.2005**
(21) Application number: 05002149.2
(22) Date of filing: 02.02.2005
(51) Int. Cl.: H04B 7/08

(54) **Diversity receiver**

(30) Priority: 09.02.2004 JP 2004031612
(71) Applicant: ALPS ELECTRIC CO., LTD., Tokyo 145-8501 (JP)
(72) Inventor: Oyama, Toru c/o ALPS ELECTRIC CO.,LTD., Tokyo, 145-8501 (JP); Otaki, Yukio c/o ALPS ELECTRIC CO.,LTD., Tokyo, 145-8501 (JP); Kitada, Kazutoshi c/o ALPS ELECTRIC CO.,LTD., Tokyo, 145-8501 (JP)
(74) Representative: Klunker . Schmitt-Nilson . Hirsch

(57) **Abstract**

A diversity receiver capable of preventing dephasing caused by antenna switching at the time of demodulation regardless of an antenna switching timing is provided. A diversity receiver includes a first receiving means having a first tuner unit and a first demodulating unit, a second receiving means having a second tuner unit and a second demodulating unit, and a diversity synthesizing means for adding demodulated signals respectively output from the demodulating units of the receiving means. A signal received by a specific antenna is uninterruptedly input to the first receiving means, and one of signals received by a plurality of antennas is selectively input to the second receiving means.

## Description

### BACKGROUND OF THE INVENTION

### 1. Field of the Invention

The present invention relates to a diversity receiver suitable for receiving terrestrial digital television broadcasting signals.

### 2. Description of the Related Art

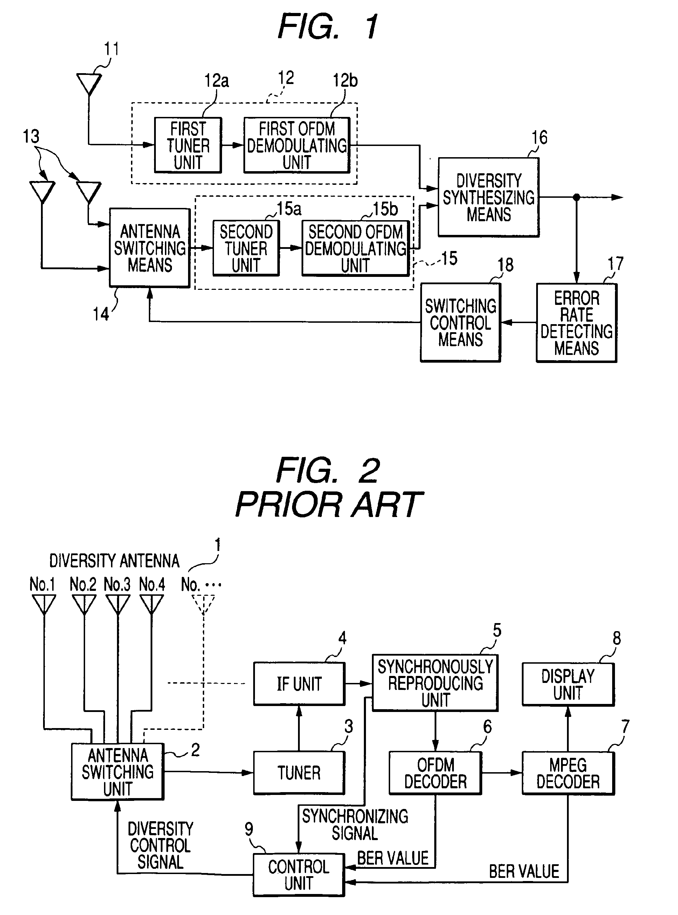

FIG. 2 shows the structure of a conventional diversity receiver. One antenna is selected from a plurality of antennas 1 (No. 1 to No. 4) by an antenna switching unit 2, and a signal received by the selected antenna is tuned by a tuner 3. The output from the tuner 3 is transmitted to a synchronously reproducing unit 5 via an IF unit 4, and the output from the synchronously reproducing unit 5 is transmitted to an OFDM decoder 6. The demodulated signal output from the OFDM decoder 6 is transmitted to an MPEG decoder 7, and a video signal output from the MPEG decoder 7 is displayed on a display unit 8 as an image.

Further, an error rate (BER) output from the OFDM decoder 6 and/or the MPEG decoder 7 is input to a control unit 9. In this case, a position for dealing with the error rate is not particularly limited. Further, the switching of the antenna 1 is performed according to the value of the error rate, and in the antenna switching, an error rate value at the time when the deterioration of an image starts, or a value better than that is set to the threshold value of an error rate for antenna switching.

In receiving terrestrial digital TV broadcasting, when the error rate value is larger than the threshold value, the control unit 9 determines that a receiving state becomes worse and then starts a diversity operation to generate a diversity signal for performing the switching of the antenna 1. Then, the control unit 9 outputs the diversity signal to the antenna switching unit 2 to perform the switching of the antenna 1 (for example, see Japanese Unexamined Patent Application Publication No. 2002-033688 (FIG. 1)).

When receiving digital broadcasting, there is a problem in that dephasing occurs at the time of antenna switching. Therefore, the above-mentioned diversity receiver performs the antenna switching within a guard interval. Thus, it is difficult to perform antenna switching at a proper timing.

Accordingly, the present invention has been made to solve the above-mentioned problems, and it is an object of the present invention to prevent dephasing caused by the antenna switching at the time of demodulation.

### SUMMARY OF THE INVENTION

In order to achieve the above-mentioned object, the present invention provides a diversity receiver comprising a first receiving means having a first tuner unit and a first demodulating unit; a second receiving means having a second tuner unit and a second demodulating unit; and a diversity synthesizing means for adding demodulated signals respectively output from the first and second demodulating units of the first and second receiving means, wherein a signal received by a specific antenna is uninterruptedly input to the first receiving means, and one of signals received by a plurality of antennas is selectively input to the second receiving means.

Further, according to the present invention, the diversity receiver further comprises an antenna switching means for selecting one of the signals received by the plurality of antennas. When an error rate of the demodulated signal output from the diversity synthesizing means is larger than a predetermined threshold value, another signal received by the plurality of antennas is selected by the antenna switching means.

Furthermore, the diversity receiver further comprises an error rate detecting means for detecting the error rate of the demodulated signal output from the diversity synthesizing means; and a switching control means for comparing the error rate to the threshold value and for outputting a switching signal to the antenna switching means when the error rate is larger than the threshold value.

According to a first aspect of the present invention, a diversity receiver comprising a first receiving means having a first tuner unit and a first demodulating unit; a second receiving means having a second tuner unit and a second demodulating unit; and a diversity synthesizing means for adding demodulated signals respectively output from the first and second demodulating units of the first and second receiving units, wherein a signal received by a specific antenna is uninterruptedly input to the first receiving means, and one of signals received by a plurality of antennas is selectively input to the second receiving means. That is, since the signal received by the antenna is uninterruptedly input to the first receiving means, the discontinuous supply of the received signal does not occur. Therefore, frame synchronization is maintained at the time of OFDM demodulation. In this state, even when the signal received by another antenna is selected by the antenna switching means, dephasing does not occur at the time of OFDM demodulation.

Further, according to a second aspect of the present invention, the diversity receiver further comprises an antenna switching means for selecting one of the signals received by the plurality of antennas. When an error rate of the demodulated signal output from the diversity synthesizing means is larger than a predetermined threshold value, another signal received by the plurality of antennas is selected by the antenna switching means. Therefore, it is possible to maintain the error rate value of the synthesized demodulation signal smaller than the threshold value.

Furthermore, according to a third aspect of the present invention, the diversity receiver further comprises an error rate detecting means for detecting the error rate of the demodulated signal output from the diversity synthesizing means; and a switching control means for comparing the error rate to the threshold value and for outputting a switching signal to the antenna switching means when the error rate is larger than the threshold value. Therefore, when the error rate is larger than the threshold value, a signal received by another antenna is automatically input to the second receiving means.

### BRIEF DESCRIPTION OF TE DRAWINGS

FIG. 1 is a circuit diagram illustrating the structure of a diversity receiver according to the present invention; and

FIG. 2 is a circuit diagram illustrating the structure of a conventional diversity receiver.

### DESCRIPTION OF THE PREFERRED EMBODIMENTS

FIG. 1 shows the structure of a diversity receiver. A digital broadcasting signal received by an antenna 11 is generally input to a first receiving means 12. The first receiving means 12 has a first tuner unit 12a and a first OFDM demodulating unit 12b connected to the next stage of the first tuner unit 12a.

A plurality of antennas 13 is connected to an antenna switching means 14. The antenna switching means 14 selects one of the plurality of antennas 13 to receive the broadcasting signal and then inputs the received broadcasting signal to a second receiving means 15. The second receiving means 15 has a second tuner unit 15a and a second OFDM demodulating unit 15b connected to the next state of the second tuner unit 15a.

The demodulated digital signals (demodulation signals) are respectively output from the OFDM demodulating units 12b and 15b of the receiving means 12 and 15 and are then input to a diversity synthesizing means 16. The diversity synthesizing means 16 controls the phases of two demodulated signals such that their phases are equal to each other and synthesizes them to output the synthesized signal. Then, the synthesized demodulation signal is input to an error rate detecting means 17. The error rate detecting means 17 detects the error rate of the synthesized demodulation signal and then inputs an error rate signal indicating the error rate value to a switching control means 18.

The switching control means 18 compares the error rate indicated by the input error rate signal to a threshold value. As a result of the comparison, when the error rate is larger than the threshold value, the switching control means 18 outputs a switching signal to the antenna switching means 14. Then, the antenna switching means 14 selects another antenna 13 instead of the previously selected antenna 13 to receive the broadcasting signal.

In the above-mentioned operation, since the signal received by the antenna 11 is uninterruptedly input to the first receiving means 12, the discontinuous supply of the received signal does not occur. Therefore, synchronization is obtained at the time of OFDM demodulation. In this state, even when the signal received by another antenna 13 is selected by the antenna switching means 14, dephasing does not occur at the time of OFDM demodulation.

## Claims

1. A diversity receiver comprising:
a first receiving means having a first tuner unit and a first demodulating unit;
a second receiving means having a second tuner unit and a second demodulating unit; and
a diversity synthesizing means for adding demodulated signals respectively output from the first and second demodulating units of the first and second receiving means,
wherein a signal received by a specific antenna is uninterruptedly input to the first receiving means, and one of signals received by a plurality of antennas is selectively input to the second receiving means.

2. The diversity receiver according to claim 1, further comprising an antenna switching means for selecting one of the signals received by the plurality of antennas,
wherein, when an error rate of the demodulated signal output from the diversity synthesizing means is larger than a predetermined threshold value, another signal received by the plurality of antennas is selected by the antenna switching means.

3. The diversity receiver according to claim 2, further comprising:
an error rate detecting means for detecting the error rate of the demodulated signal output from the diversity synthesizing means; and
a switching control means for comparing the error rate to the threshold value and for outputting a switching signal to the antenna switching means when the error rate is larger than the threshold value.
